# EUROPEAN PATENT SPECIFICATION

(11) **EP 2 116 806 B1**
(45) Date of publication and mention of the grant of the patent: **08.08.2012**
(21) Application number: 09460004.6
(22) Date of filing: 19.01.2009
(51) Int. Cl.: F41J 1/10, F16M 11/04, F16M 13/02

(54) **A target fixing device**
Zielbefestigungsvorrichtung
Dispositif de fixation de cible

(30) Priority: 05.05.2008 PL 38509208
(43) Date of publication of application: 11.11.2009
(73) Proprietor: Politechnika Opolska, 45-271 Opole (PL)
(72) Inventor: Anigacz, Wojciech, 45-267 Opole (PL)
(74) Representative: Surmiak, Wieslawa Halina

(56) References cited:
- DE-A1- 3 600 643
- DE-A1- 4 227 171
- US-A- 4 189 146
- US-A- 5 125 516
- US-A- 5 632 491

## Description

Use of a target fixing device is an object of this invention.

Known from document DE 4227171 is a mechanism for fixing the back mirror with only the body of the vehicle. It is equipped in three magnets, profitably in the shape of rings placed on one plate, profitably elastic about bendable line separating sharply outlined one part of plate with two magnets from the second part of this of plate with one magnet. Bendable line is only scratch in the material of the plate. Magnets are placed on this one plate so that line joining their contours creates the triangle with rounded vertexes of the triangle.
Known from document US 5125516 is an apparatus for consolidating a variable plurality of devices it has the shape of the elongated belt of crosswise bendable, executed, profitably from the resilient polymer. Bendable, transverse lines are only scratch in the material, and their arrangement is conditioned on dimensions connected electronic devices. Another target fixing device is disclosed in US 5632491.
Such a device, referred to in the publication of Uren J., Price W. F., "Surveying for engineers" by Palgrave Macmilam, fourth edition, New York 2006, page 81, consists of a levelling head with a pin, generally situated on a tripod.
Such a device, referred to in the publication of Hennecke F., Werner H., Ingenieurgeodasie, "Anwendungen im Bauwesen und im Anlagenbau", 2 bearbeitete Auflage, by VEB Verlag fur Bauwesen, page 186, consists of a plate with a target that is sticked or drawn on it, screwed or welded to a structural body.

Generally speaking, it is rather difficult to place the known target use of a fixing devices, particularly because of a limited room to put the tripod, or due to the necessity of screwing or welding them to structural bodies, which causes their damages. Very often, surveying is far hindered because it is hard to find a stable reference point.

The essence use of the target fixing device is that it is made up of articulated links, while some of the links are provided with magnets. It is advantageous when the links with circular magnets are placed on both sides of the carrying link. It is also advantageous when the device consists of five links, each of them rectangularly shaped.

Use of the invented device enables its stable location on a metallic element of any shape, which makes possible to obtain a stable reference point. In principle, under any conditions of surveying, it is possible to locate it in such a way, that the target is situated perpendicularly to the target axis of the measuring instrument. Use of the invented device is especially serviceable when surveying objects, where measuring positions have to be moved in relation to the same reference point. Manufacturing costs of the invented device are relatively low compared with those of the known fixing devices.

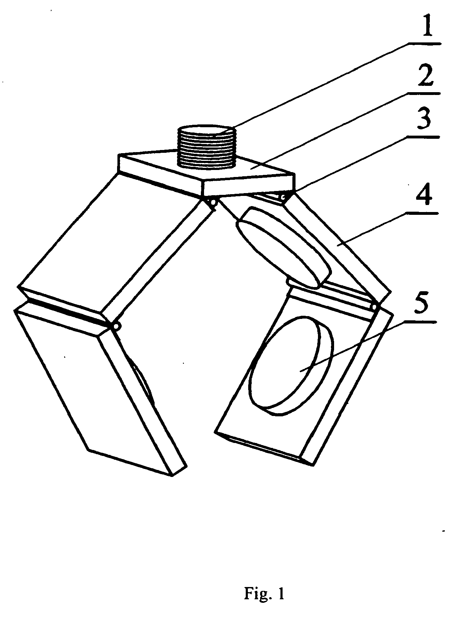

The invention object, a real model, has been described on the drawing that illustrates a scheme of the target use of fixing device.
The very device used according to the invention, is made up of five links **4,** one of them **2** carrying link provided with target fixing element **1,** e.i. screwed pin **1.** Each of the links **4** is of rectangular shape. Articulated joints **3** connect the links **4.** Selected links **4** are provided with circular magnets (discs) **5** situated on both sides of carrying link **2.**
Before a surveying is carried out, the invented target fixing device is located in the reference point, and/or in check point at the surveyed object.

## Claims

1. Use of a target fixing device provided with a plate on which a target is placed, **characterized by** its composition: made up of links **( 4 )** interconnected by articulation joints **( 3 ),** while selected links **( 4 )** are provided with magnets **( 5 )** said target being used as a stable reference point for measuring instrument.

2. Use of the device, according to the claim 1, **characterized as follows:** its links **( 4 )** provided with circular (discs) magnets (5), are located on both sides of carrying link **( 2 ).**

3. Use of the device , according to the claim 1, **characterized as follows:** it consists of five links **( 4 )**, each of rectangular shape.

## Patentansprüche

1. Benutzung eines Gerätes zur Befestigung einer Zielscheibe ausgestattet mit einem Element auf dem die Zielscheibe befestigt wird, welches charakterisiert ist durch seine Bestandteile: bestehend aus Gliedern (4) untereinander verbunden durch Gelenke (3), von denen bestimmte Gelenke (4) mit Magneten (5) ausgestattet sind die als ein stabiler Referenzpunkt fpr das Messgerät benutzt werden.

2. Benutzung des Gerätes entsprechend Anspruch 1, charakterisiert wie folgt: seine Gelenke (4) sind mit runden (scheibenförmigen) Magneten (5) ausgesstattet, die sich auf beiden Seiten des Tragegelänks befinden.

3. Benutzung des Gerätes entsprechend Anspruch 1, charakterisiert wie folgt: es besteht aus fünf Verbindungen, von denen jedes recheckig geformt ist.

## Revendications

1. L'utilisation du dispositif de fixation de plaque cible pourvu d'un élément sur lequel se trouve la cible, qui **se caractérise par** sa composition : composé de segments **(4)** reliés par des articulations **(3)** et des segments **(4)** choisis sont pourvus d'aimants **(5),** et qui est utilisé comme point de référence pour un appareil de mesure.

2. Selon la revendication 1, l'utilisation du dispositif **se caractérise par** les segments **(4)** avec des aimants **(5)** en forme de disque (circulaire), situés des deux côtés du segment porteur **(2).**

3. Selon la revendication 1, l'utilisation du dispositif b sa composition : composé de cinq segments **(4),** dont chaqun a une forme rectangulaire.
